# EUROPÄISCHE PATENTSCHRIFT

(11) **EP 1 943 082 B1**
(45) Veröffentlichungstag und Bekanntmachung des Hinweises auf die Patenterteilung: **28.04.2010**
(21) Anmeldenummer: 06776462.1
(22) Anmeldetag: 27.07.2006
(51) Int. Cl.: B29C 61/06, B29C 65/48

(54) **HÜLSENFÖRMIGE ETIKETTEN**
SLEEVE-SHAPED LABELS
ETIQUETTES SOUS FORME DE MANCHONS

(30) Priorität: 14.10.2005 DE 102005049681
(43) Veröffentlichungstag der Anmeldung: 16.07.2008
(73) Patentinhaber: Henkel AG & Co. KGaA, 40589 Düsseldorf (DE)
(72) Erfinder: MÖLLER, Thomas, 40593 Düsseldorf (DE); STRENGER, Stefan, 45219 Essen (DE); TÖNNIESSEN, Holger, 52382 Niederzier (DE)
(86) Internationale Anmeldenummer: PCT/EP2006/007449
(87) Internationale Veröffentlichungsnummer: WO 2007/042092

(56) Entgegenhaltungen:
- US-A1- 2005 165 164

## Beschreibung

Die Erfindung betrifft ein Verfahren zur Herstellung von hülsenförmigen Etiketten, bei dem eine ggf. bedruckte Folie mit den Längsseiten aufeinandergeklebt wird, wobei ein reaktiver Klebstoff eingesetzt wird. Solche hülsenförmigen Etiketten sind als dehnbare Etiketten oder schrumpfbare Etiketten, als Rund-um-Etiketten, beispielsweise für Flaschen oder mehreckige Verpackungen geeignet. Weiterhin betrifft die Erfindung hülsenförmige Etiketten, wobei die Naht der Etiketten mit einem reaktiven Klebstoff verklebt sird.

Es ist bekannt wie zum Beispiel aus US-A-2005/165164, dass Gegenstände mit Etiketten versehen werden, beispielsweise werden Flaschen mit Etiketten verschiedener Formen versehen. Ebenfalls ist es bekannt, solche Etiketten nicht auf die Oberfläche des Gegenstandes aufzukleben, sondern auch Rund-um-Etiketten einzusetzen. Solche Rund-um-Etiketten werden häufig derart aufgebracht, dass ein vorgefertigtes flaches Etikett längs einer Kante mit einem Klebstoff versehen wird, diese Seite dann auf beispielsweise Flaschen aufgebracht wird und durch Drehen das Etikett rund um die Flasche gelegt wird. Auf der gegenüberliegenden Kante wird dann ebenfalls eine Klebstoffschicht aufgebracht, die überlappend mit dem Etikett verklebt wird.

Weiterhin sind Maschinen und Verfahren bekannt, Rund-um-Etiketten in Form einer Hülse auf rotationssymmetrische Gegenstände aufzubringen. Dabei handelt es sich um ringförmige Etiketten aus einer oder mehreren gegeneinander kaschierten Folien, die auf einen Umfang größer als der zu etikettierende Gegenstand gebracht werden, über diesen Gegenstand gestreift werden und danach durch elastische Rückverformung (stretch-Etiketten) oder durch thermisches Schrumpfen (Schrumpfetiketten) auf die Oberfläche des Gegenstandes aufgebracht werden. Ebenso ist es bekannt, dass solche schrumpfbaren hülsenförmigen Etiketten auch als Sicherung für Schraubverschlüsse von Flaschen eingesetzt werden können.

In der JP 61244731 wird ein Verfahren beschrieben, bei dem ein kontinuierliches Band aus schrumpfbarer Polypropylenfolie bedruckt wird und gleichzeitig an bestimmten Stellen ein Schmelzklebstoff aufgetragen wird. Das Band wird auf eine geeignete Länge geschnitten und die einzelnen Stücke in Form einer Hülse zusammengeführt und durch Erhitzen verbunden. Danach können diese Hülsen auf die entsprechenden Flaschen aufgeschrumpft werden. Eine genau Charakterisierung der Klebstoffe ist nicht gegeben. In der JP 07088958 wird ein Verfahren beschrieben, in dem ein Polyolefinfilm ggf. bedruckt wird und mit Elektronenstrahlhärtenden Klebstoffen in Form eines Schlauches verklebt wird. Nähere Angaben zu dem Klebstoff werden nicht gemacht. Die Schlauchmaterialien werden aufgerollt.

In der JP 2000043156 wird ein Verfahren beschrieben, in dem auf einen Polyethylenfilm an der Längskante ein Primer aufgetragen wird und danach ein Cyanacrylatklebstoff. Die Längskanten werden zusammengeführt und verklebt. Die entsprechende Folie weist elastische Eigenschaften auf. In der JP 2002086572 wird ein Verfahren beschrieben, in dem Etiketten hergestellt werden durch Zusammenführen von gegenüberliegenden Seiten eines Kunststofffilms, wobei die beiden Seiten mit einem Lösemittel zusammengeklebt werden, das ein fluoreszierendes Mittel enthält. Die entstehenden Etikettenhülsen sind aus schrumpfbarem Material.

In der US 6042907 wird ein Verfahren zum Herstellen von Rund-um-Etiketten beschrieben, bei dem eine Folie aus zwei unterschiedlichen Materialien hergestellt wird und die Seitenkanten der Etiketten auf dem Substrat mit einem Heißschmelzklebstoff zusammengeklebt werden. Eine nähere Beschreibung des Heißschmelzklebstoffs ist nicht gegeben. In der EP 0688720 wird ein Verfahren beschrieben, bei dem ein kontinuierlichen Film aus einer schrumpfbaren Folie mit einem lösemittelhaltigem Klebstoff verklebt wird, wobei ein Klebstoff auf die innere Fläche aufgetragen wird und so ein röhrenförmiges Etikett ergibt. Dieses ist in der Wärme schrumpfbar. Eine nähere Ausgestaltung des Klebstoffs ist nicht beschrieben.

Die beschriebenen Verfahren, Seitenkanten von schrumpf- oder dehnbaren Folien zu verbinden, weisen verschiedene Nachteile auf. Wird die Verbindung der beiden Kanten durch Wärme, z. B. Aufschmelzen, hervorgerufen, zeigt die Längsnaht andere Schrumpfeigenschaften als die übrige Folie. Der Einsatz von Lösemitteln als Klebstoff, die das Folienmaterial anquellen und so beide Schichten miteinander verbinden, soll aus Gründen des Gesundheitschutzes vermieden werden. Weiterhin ist in beiden Fällen das optische Aussehen der Fügenaht deutlich von dem Etikett zu unterscheiden und bildet häufig eine Wulst. Bei Schmelzklebstoffen ist allgemein bekannt, dass diese in der Wärme an Adhäsion / Kohäsion verlieren. Deswegen sind derart verklebten Etiketten häufig nicht schrumpfbar, weil bei dem Schrumpfprozess in der Wärme Scherkräfte auf die Klebenaht einwirken und diese dabei ihre Stabilität verliert und verrutscht oder sich öffnet. Auch können ggf. eingeschossene Luftblasen ein Verrutschen der Klebenaht hervorrufen. Auch das Abfüllen von heißen Inhalten in auf diese Weise mit Etiketten versehene Gefäße kann eine thermoplastische Klebenaht negativ beeinflussen.

Aufgabe der vorliegenden Erfindung ist es deswegen, ein Verfahren zum Herstellen von Rund-um-Etiketten aus Folien zu Verfügung zu stellen, bei dem eine Folie an der Längsnaht mit einem reaktiven Klebstoff zusammengefügt wird, wobei dieser Klebstoff gute Kohäsions- und Adhäsionseigenschaften aufweist und das entsprechende Etikett als elastisch dehnbares Etikett über den Gegenstand gestreift werden kann oder als schrumpfbares Etikett durch Aufschrumpfen in der Wärme auf den Gegenstand aufgebracht wird. Insbesondere ist das Verfahren geeignet, um in einem kontinuierlichen Arbeitsprozess nach der Verklebung die Etiketten unmittelbar zu konfektionieren und auf die Gegenstände aufzubringen.

Die Aufgabe wird gelöst durch eine Verfahren zum kontinuierlichen Herstellen von Folienschläuchen zur Herstellung von hülsenförmigen Etiketten, dadurch gekennzeichnet, dass eine einschichtige oder mehrschichtige Folie, die elastisch dehnbar oder in der Wärme schrumpfbar ist, an einer Längskante auf einer Seite oder an beiden Längskanten auf gegenüberliegenden Seiten der Folie mit einem lösemittelfreien Klebstoff beschichtet wird, danach die beiden Längskanten mit der Klebstoffschicht miteinander überlappend aufeinander gebracht und verklebt werden, der so entstandene Folienschlauch unmittelbar oder nach einer Lagerung weiterverarbeitet werden kann, wobei der Klebstoff ausgewählt wird aus durch aktinische Strahlung vernetzenden Klebstoffen oder durch Polykondensation von reaktiven Gruppen vernetzenden Klebstoffen.

Ein weiterer Gegenstand der Erfindung sind hülsenförmige Etiketten hergestellt aus Folienschläuchen von einschichtigen oder mehrschichtigen elastisch dehnbaren oder in der Wärme schrumpfbaren Folien, die entlang einer Längskante oder entlang beider gegenüberliegender Längskanten auf einer Seite bzw. auf gegenüberliegenden Seiten der Folie mit einem entweder durch aktinische Strahlung vernetzenden Klebstoff oder durch reaktive Gruppen vernetzenden Klebstoff beschichtet wurden und an den Längskanten auf der Fläche der Klebstoffschicht überlappend verklebt wurden.

Das erfindungsgemäße Verfahren setzt im Prinzip bekannte Folien ein, die in der Herstellung von hülsenförmigen Rund-um-Etiketten bereits verwendet werden. Solche Etiketten können beispielsweise aus einer oder mehreren Schichten bestehen. Diese können transparent, bedruckt oder auch eingefärbt sein. Bei den entsprechenden Etiketten sind zwei unterschiedliche Applikationsverfahren zu unterscheiden. Die Rund-um-Etiketten können aus elastischem, dehnbaren Folienmaterial bestehen. Dabei wird das Etikett gedehnt und in gedehnter Form über den Gegenstand gebracht und die dehnende Kraft entfernt. Durch die rückstellende Kraft der Folie zieht sich die Hülse des Etiketts zusammen und sitzt danach fest auf dem zu etikettierenden Gegenstand. Ein weiteres Anwendungsverfahren arbeitet mit Schrumpffolien. Dabei ist die Folie aus einem in der Wärme schrumpfbaren Material hergestellt. Diese wird in eine Hülsenform gebracht. Der Durchmesser des Rund-um-Etikettes ist geringfügig größer als der zu etikettierende Gegenstand. Das Etikett wird über den Gegenstand geschoben und unmittelbar danach in der Wärme geschrumpft. Dabei zieht sich das Folienmaterial zusammen und liegt dicht an der Oberfläche des Gegenstandes an. Dabei können auch unregelmäßige Konturen eines Gegenstandes abgedeckt werden.

Folienmaterialien zum Herstellen solcher hülsenförmigen Etiketten sind bekannt. Es handelt sich beispielsweise um Folien aus Polyolefinen, wie Polyethylen (PE) oder Polypropylen (PP), Polyvinylchlorid (PVC), Polystyrol (PS) oder Polyestern, wie PET. Dabei könne die Folienmaterialen auch modifiziert sein, z. B. durch Modifizieren der Polymere mit funktionellen Gruppen, oder es können zusätzliche Komponenten, beispielsweise Pigmente oder andere Polymere, in der Folie enthalten sein. Es kann sich um gefärbte, bedruckte oder farblose Folien handeln, es können Einschicht- oder Mehrschichtfolien verwendet werden. Wenn solche Folien schrumpfbar sind, handelt es sich im allgemeinen um mono- oder bidirektional gereckte Folien. Verfahren zur Herstellung solcher Folien sind allgemein bekannt, auch Verfahren zur Herstellung von Mehrschichtfolien oder zum Bedrucken solcher Folien sind beschrieben.

Die erfindungsgemäße Arbeitsweise geht von bekannten Folienmaterialien als Vorprodukt aus. Dabei werden solche Folien in Bahnen hergestellt und ggf. entsprechend dem Verwendungszweck bedruckt. Es kann ggf. erforderlich sein, die Folien auf der zu verklebenden Fläche vorzubehandeln, z.B. durch eine CoronaBehandlung, üblicherweise kann aber bei bedruckten Folien diese direkt weiterverarbeitet werden. Ein Primer ist nach dem erfindungsgemäßen Verfahren vor dem Auftragen des Klebstoffs nicht notwendig und soll vermieden werden. Es ist jedoch darauf zu achten, dass die Fläche der Klebenaht keine Substanzen aufweist, die die Haftung der Klebstoffe auf dem Substrat negativ beeinflussen. Bevorzugt ist die zu verklebende Fläche nicht bedruckt.

In einer bevorzugten Ausführungsform wird eine Folienbahn unmittelbar nach dem Bedrucken zu einer Schlauchform verklebt. Dabei wird an einer Längskante der Folie ein erfindungsgemäß geeigneter Klebstoff streifenförmig aufgetragen. Die Breite des Klebstoffstreifens kann zwischen 1 mm bis 20 mm betragen, bevorzugt 2 mm bis 10 mm. Sie muss für eine sichere Verklebung ausreichen. Dabei ist es im allgemeinen ausreichend, wenn der Klebstoff entlang einer Kante der Folie aufgetragen wird, es kann jedoch an beiden Kanten auf unterschiedlichen Seiten der Folie ein Klebstoff aufgetragen werden, sodass die beiden beschichteten Streifen übereinander gebracht werden können. Die so beschichteten Längskanten der Folie werden unmittelbar nach der Beschichtung mit dem Klebstoff überlappend zu einer Klebenaht zusammengeführt und miteinander zu einem Schlauch verklebt.

Das Verkleben kann durch verschiedene Maßnahmen unterstützt werden. So können die verklebten Flächen durch Druck, z.B. durch Anpressrollen, miteinander verbunden werden. Weiterhin ist es möglich, durch Erwärmen das Verkleben zu beschleunigen. Dabei ist darauf zu achten, dass bei der Erwärmung die Folie thermisch nicht beschädigt wird. Das Erwärmen soll so geschehen, dass Temperatur unterhalb der für das Schrumpfen notwendigen Temperatur liegen, bzw. unterhalb einer Temperatur bei der Schädigungen der Folie, z.B. von Verfärbungen, auftreten. Ebenso ist es zweckmäßig bei der Verwendung von durch aktinische Strahlung vernetzenden Klebstoffen, diese unmittelbar nach dem Verbinden der Klebenaht zu bestrahlen.

Der auf diese Weise gebildete Folienschlauch kann bevorzugt unmittelbar weiterverarbeitet werden, z.B. durch Schneiden in eine passende Größe für hülsenförmige Etiketten, oder er wird in einer geeigneten Form, z.B. aufgerollt, gelagert. Wird der Folienschlauch unmittelbar weiterverarbeitet, sind Klebstoffe auszuwählen, die schon nach kurzer Zeit eine ausreichende Klebkraft für das Applikationsverfahren der hülsenförmigen Etiketten aufweisen, d.h. die Klebenaht muss ein Dehnen des Etiketts ohne Veränderung aushalten oder sie muss die thermische Belastung beim Schrumpfen unverändert überstehen. Wird der Folienschlauch gelagert, können Klebstoffe ausgewählt werden, die eine gewisse Zeit zur Nachhärtung benötigen, um ihre volle Klebkraft auszubilden. Es ist bei einer Lagerung des Folienschlauchs, beispielsweise durch Aufrollen, dafür Sorge zu tragen, dass dieser nicht in sich verklebt und vor der weiteren Verarbeitung voneinander getrennt werden kann.

Die Klebstoffe werden erfindungsgemäß ausgewählt aus der Gruppe der reaktiven lösemittelfreien Klebstoffe. Es kann sich um durch aktinische Strahlung vernetzende Klebstoffe oder durch andere reaktive Gruppen vernetzende Klebstoffe handeln. Dabei kann es sich um 1-Komponenten-Systeme handeln oder auch um 2- Komponenten -Systeme, es kann sich um bei Raumtemperatur vernetzende Systeme oder um durch Temperaturerhöhung vernetzende Systeme handeln. Es kann sich um wässrige oder lösemittelfreie Klebstoffe handeln, ggf. können auch lösemittelhaltige Klebstoffe eingesetzt werden, solange die Lösemittel nicht die Folien anquellen. Besonders bevorzugt sind lösemittelfreie Klebstoffe, insbesondere reaktive Schmelzklebstoffe, insbesondere strahlenhärtende Schmelzklebstoffe.

Geeignete Klebstoffe sind beispielsweise strahlenvernetzbare Klebstoffe, die durch radikalische oder kationische Polymerisation vernetzen können. Solche Klebstoffe können niedrigviskos sein, wie beispielsweise gemäß EP 1042422, es sind durch Strahlung vernetzende Schmelzklebstoffe, wie in WO 2004/013244 beschrieben, oder es sind bekannte Klebstoffe auf Basis von Estern der (Meth)acrylsäure; wie in US 5128386, US 5294688, DE 10105278 oder DE 10310889 erwähnt. Es ist auch möglich Klebstoffe einzusetzen, die zwei verschiedene Vernetzungsmechanismen aufweisen, z.B. Strahlenhärtung und Vernetzung über NCO-Gruppen, die beispielsweise in der WO 01/12691 beschrieben sind.

Radikalisch vernetzbare Klebstoffe enthalten beispielsweise Polymere oder Oligomere, die olefinisch ungesättigte Gruppen aufweisen. Dabei kann es sich beispielsweise um ungesättigte Carbonsäuregruppen, wie Acrylat-, Methacrylat-, Maleinsäure- oder Maleinimidgruppen handeln, oder auch um Vinylestergruppen, die in Polymeren auf Basis von Polyvinylacetat, Polyvinylidenchlorid, Poly(meth)acrylsäure-Alkyl-, Cycloalkyl- oder Arylestern, (Meth)acrylsäure-Homo- und/oder Copolymerisaten, Polyestern mit aromatischen und/oder aliphatischen Carbonsäuren, Polyethern, Polycarbonaten, Polyacetalen, Polyurethanen, Polyolefinen, Vinylcopolymeren oder Kautschukpolymeren wie Nitril-, Isopren-, Chloropren-, Di- oder Multiblockcopolymeren aus Styrol mit Butadien und/oder Isopren sowie deren hydrierte Varianten, wie beispielsweise SB-, SBS-, SI-, SIS-, SEPS-, SEEPS-, SIPS-, oder SEBS-Kautschuk enthalten sein können. Die Anordnung der Polymerblöcke kann dabei sowohl linear als auch radial sein. Diese Polymere können gegebenenfalls mit oder ohne zusätzlichen Photoinitiator vernetzt werden.

Kationisch vernetzbare Klebstoffe können beispielsweise Polymere auf Basis von epoxidierten Polyolefinen enthalten, wie zum Beispiel beschrieben in US 5229464, WO 9828338 oder US 6541575, oder Polyester-, Polyacrylat- oder Polyurethan-Basispolymere mit über reaktive Gruppen gebundenen Glycidylgruppen. Ggf. können diese Klebstoffe auch niedermolekulare Oligomere enthalten, die reaktive Gruppen aufweisen, die mit den Epoxygruppen der Basispolymere reagieren können. Die Epoxygruppen können durch Epoxidierung von Doppelbindungen erhalten werden oder es werden andere funktionelle Gruppen der Ausgangspolymere, z.B. OH-Gruppen, mit geeigneten Glycidylgruppen-haltigen Verbindungen umgesetzt. Weitere geeignete Gruppen für die kationische Vernetzung sind Vinylether oder Oxetangruppen. Kationisch oder radikalisch vernetzende Systeme sollen insbesondere UV-vernetzend sein und enthalten dann im allgemeinen mindestens einen Initiator für die Polymerisation.

Im Fall von niedrigviskosen Klebstoffen können noch andere Komponenten enthalten sein, beispielsweise Additive, Haftvermittler, Reaktivverdünner, Stabilisatoren oder Benetzungsmittel. Bevorzugt ist der Klebstoff frei von organischen Lösungsmitteln. Im bevorzugten Fall von strahlungshärtenden Schmelzklebstoffen sind in dem Klebstoff noch weitere Komponenten enthalten, wie beispielsweise ein klebrigmachendes Harz sowie ggf. weitere Hilfsstoffe wie Weichmacher, Wachse Stabilisatoren, Haftvermittler oder andere Additive.

Das Molekulargewicht der Polymere ist von der Applikationsform abhängig. Bei niedrigviskosen Klebstoffen kann es zwischen 500 bis zu 20000 g/mol betragen bei Schmelzklebstoffen 2000 bis zu 100000 g/mol (bestimmt durch GPC).

Klebstoffe, die auf Basis von Polykondensation oder Polyaddition von funktionellen Gruppen vernetzen, sind ebenfalls bekannt. Diese sind beispielsweise in der EP 1045886 beschrieben. Es kann sich dabei um Bindemittel mit funktionellen Gruppen handeln, wie beispielsweise um Epoxidgruppen, Isocyanatgruppen oder cyclische Carbonatgruppen. Diese können mit einer zweiten Komponente, die geeignete reaktive Gruppen trägt, reagieren, wobei es sich bevorzugt um eine Polykondensation oder Polyaddition handelt. Solche Gruppen sind beispielsweise primäre oder sekundäre Aminogruppen, OH-Gruppen, SH- Gruppen, Carboxylgruppen oder Phenolgruppen. Dabei könne 2-komponenten-Systeme vorliegen, d.h. die beiden Komponenten werden erst vor der Applikation gemischt und eine Reaktivität ist üblicherweise schon bei niedriger Temperatur gegeben. Es sind aber auch 1-Komponenten-Systeme möglich, dabei wird die Vernetzungsreaktion erst bei erhöhter Temperatur gestartet. Es könne auch zwei verschiedene Vernetzungsmechanismen gleichzeitig vorhanden sein, z.B. auch eine Vernetzung von Isocyanatgruppen über OH-Gruppen von Polyolen oder über Luftfeuchtigkeit. Es können Klebstoffe verwendet werden, die Initiatoren enthalten auf Basis von Organoboranderivaten, wie z.B. beschrieben in US 5296433, US 6479602 oder US 6844080.

Geeignete Bindemittel, wie Epoxidharze, Polyurethanprepolymere, Polycarbonatbindemittel sind dem Fachmann in weiten Bereichen bekannt. Ebenso sind vernetzende Komponenten bekannt wie Polyole auf Basis von Polyethern, Polyestern, Polyacrylaten, Polyurethanen ; Polyamine mit sekundären oder primären Aminogruppen mit aliphatischem, aromatischem, cycloaliphatischem Grundgerüst oder auf Polyetherbasis ; Polyester oder Polyacrylate mit freien Carboxylgruppen. Die Klebstoffe könne die üblichen Additive und Hilfsstoffe, wie Wasser, Stabilisatoren, Katalysatoren, Haftvermittler, Viskositätsregler, Reaktivverdünner, Harze, haftklebrige Komponenten, ggf. Lösemittel, Weichmacher und/oder Wachse enthalten.

Im Fall von 2 K-Klebstoffen ist es auch möglich, jede Komponente auf eine Seite der Klebefläche aufzutragen und die Vermischung durch das Zusammenführen zu erreichen. Besonders bevorzugt sind jedoch reaktive 1 K -Schmelzklebstoffe auf Basis von reaktiven Polyurethanen oder UV-vernetzende Schmelzklebstoffe.

Die Auswahl der Klebstoffe soll der zu verklebenden Folie angepasst sein. Dabei ist sicherzustellen, dass eine ausreichende Haftung zu der Oberfläche aufgebaut wird. Insbesondere soll eine schnelle Anfangshaftung gegeben sein. Wird der Folienschlauch unmittelbar weiterverarbeitet, muss der Haftungsaufbau des Klebstoffs vor dem Überstreifen auf den Gegenstand fast vollständig beendet sein. Wird der verklebte Folienschlauch oder das bereits konfektionierte Etikett noch gelagert, kann sich die endgültige Haftung auch während einer Nachreaktionszeit von mehr als 24 Stunden aufbauen. Die Scherfestigkeit der Verklebung soll zum Zeitpunkt der Applikation des Etiketts gemessen als Zugfestigkeit bei 25° C oberhalb von 25 N / 12,5 mm betragen, insbesondere oberhalb von 40 N / 12,5 mm.

In der bevorzugten Form der unmittelbaren (in-line) Verarbeitung, soll sich die notwendige Haftung in einem Zeitraum von 1 sec bis zu 5 min aufbauen, insbesondere von 3 sec bis zu 3 min., besonders von 10 sec bis zu 1 min. Als Test für eine ausreichende Haftung wird ein erfindungsgemäß hergestelltes Etikett über einen runden Gegenstand, z.B. eine Dose, geführt und unmittelbar befestigt, z.B. aufgeschrumpft. Danach wird die Dose bei 120°C gelagert und nach einer Testzeit von mindestens 5 min. soll die Klebenaht nicht verrutscht, geöffnet oder an den Kanten gelöst sein.

Das Herstellen des Folienschlauchs erfolgt mit im Prinzip bekannten Maschinen, die mit Segmenten, Walzen oder Düsen den Klebstoff auf den Rand der Folie auftragen. Das kann beispielsweise durch sprühen, rakeln, drucken oder Rollenauftrag geschehen. Die Auftragsart ist auch von der Viskosität des Klebstoffs abhängig. Soll das Auftragen beispielsweise als Sprühauftrag geschehen, so muss der Klebstoff eine niedrige Viskosität aufweisen. Wird ein Auftragen mit einer Düse oder im curtain-coating-Verfahren durchgeführt, kann die Viskosität höher liegen. Die Viskosität des Klebstoffs kann durch die Auftragstemperatur beeinflusst werden. Um eine im allgemeinen erwünschte niedrige Viskosität zu erhalten, kann der Klebstoff bei erhöhter Temperatur aufgetragen werden. Dabei soll die Temperatur des Klebstoffs beim Auftreffen auf die Folie diese nicht negativ beeinflussen.

Die erfindungsgemäß einsetzbaren Klebstoffe weisen die erforderliche niedrige Viskosität bei niedrigen Verarbeitungstemperaturen auf, wie sie beispielsweise bei der Verwendung auf temperaturempfindlichen Etiketten gewünscht ist. Die Verarbeitungstemperaturen liegen im Bereich von 20 °C bis 200 °C, insbesondere unter 150 °C, bevorzugt im Bereich von 30 °C bis 80 °C bei flüssigen Klebstoffen, bevorzugt im Bereich von 80 °C bis 130 °C bei Verwendung von Schmelzklebstoffen. Die niedrige Viskosität gewährleistet gleichzeitig einen sauberen Maschinenlauf auf den handelsüblichen Maschinen.

Für eine problemlose Verarbeitung sollen die erfindungsgemäß geeigneten Klebstoffe eine entsprechend niedrige Viskosität aufweisen, die vom Applikationsverfahren abhängig ist. Bei einer Anwendung im curtain-coating-Verfahren kann die Viskosität bei Austritt aus der Schlitzdüse ggf. bis zu 100000 mPas betragen, bei der Applikationstemperatur für andere bevorzugte Auftragsverfahren beträgt sie üblicherweise 100 mPas bis 7500 mPas. Für bestimmte Verarbeitungsverfahren ist eine Viskosität unter 4500 mPas insbesondere bis zu 2500 mPas besonders geeignet, insbesondere liegt der Bereich bei 200 mPas bis 1000 mPas, gemessen mit einem Brookfield RVT, Spindel 27. Im bevorzugten Fall von Schmelzklebstoffen soll diese Viskosität bei Temperaturen bis zu 130 °C erreicht werden.

Wird ein strahlenvernetzbarer Klebstoff eingesetzt, soll die Bestrahlung insbesondere mit UV-Licht vorzugsweise bei einer Wellenlänge im Bereich von 100 nm bis 380 nm stattfinden. Als UV-Strahlungsdosis sind 50 - 2000 J/cm² geeignet. Bei der Bestrahlung des Klebstoffs mit Elektronenstrahlen wird eine Strahlungsdosis von 10 bis 100 Kilogray (kGy) bevorzugt. Bei der Bestrahlung des erfindungsgemäßen Schmelzhaftklebstoffs mit UV-Licht kann die Vernetzung außer durch die Strahlungs-Dosis noch durch den Einsatz von Photoinitiatoren, Photosensibilisatoren oder Reglermolekülen gesteuert werden.

Nach der Applikation eines erfindungsgemäß bevorzugten strahlenhärtenden Klebstoffes, insbesondere eines Schmelzklebstoffs, und dem Zusammenfügen der zu verklebenden Kanten, wird der erfindungsgemäße Klebstoff mit einer ausreichenden UV- oder Elektronenstrahl-Dosis bestrahlt, damit der Klebstoff kurzfristig eine ausreichende Haftung besitzt und die Oberflächen verbindet. Dabei soll die Dauer der Bestrahlung unterhalb von 10 sec liegen, beispielsweise zwischen 0,1 bis 5 sec. Bevorzugt werden bei der Bestrahlung mit UV-Strahlen transparente Etiketten verwendet oder solche, die mindestens an der Klebenaht UV-durchlässig sind.

Nach der Verklebung der Längskanten wird der Folienschlauch weiter verarbeitet. Das kann nach einer Lagerung geschehen oder unmittelbar in einem Vorgang (in-line). Dabei wird der Schlauch in geeigneter Länge in hülsenförmige Etiketten geschnitten. Diese hülsenförmigen Etiketten werden anschließend auf den zu etikettierenden Gegenstand aufgebracht. In einer Ausführungsform handelt es sich elastisch dehnbare Etiketten. Dabei wird die Hülse kurzzeitig gedehnt und in gedehntem Zustand über den Gegenstand, wie beispielsweise Flaschen, Aerosoldosen, quaderförmige Verpackungen, geschoben. Danach kann die Hülse sich wieder zusammenziehen und ist dann auf dem Gegenstand befestigt. Der zu etikettierende Gegenstand kann dabei leer oder auch schon befüllt sein. Maschinen zum Aufbringen solcher Etiketten auf die Gegenstände sind dem Fachmann bekannt.

In einer bevorzugten Ausführungsform ist das Rund-um-Etikett eine schrumpfbare Hülse. Dabei ist der Durchmesser der Hülse geringfügig größer als der zu etikettierende Gegenstand. Das Etikett wird über den Gegenstand gebracht und unmittelbar danach einer Wärmequelle ausgesetzt, so dass der Schrumpfungsprozess durchgeführt wird. Im allgemeinen werden die schrumpfbaren hülsenförmigen Etiketten bei Temperaturen von mindestens 100 °C, häufig über 120 °C, meist über 150 °C innerhalb weniger Sekunden an die Kontur aufgeschrumpft. Die Obergrenze soll unter 230 °C betragen und das Substrat oder der Inhalt der Körper soll dabei nicht geschädigt werden. Dabei kann ggf. das Etikett kurzzeitig angedrückt werden oder es wird durch eine Klebestelle fixiert, damit es seine korrekte Position auf dem Gegenstand behält. Nach dem Schrumpfen sitzt das Etikett fest auf dem Gegen-stand. Dabei kann sich das Etikett auch besonderen Formen des Gegenstands anpassen. Vorrichtungen zum thermisch Schrumpfen hülsenförmiger Etiketten, wie Öfen, IR-Strahler, Heißluftgebläse, sind dem Fachmann ebenfalls bekannt.

Im Bereich der Verklebung weist das hülsenförmige Etikett nach dem Aufbringen auf den Gegenstand eine sehr niedrige Kriechneigung bei gleichzeitig guter Klebefestigkeit der Klebenaht auf. Bei dem Einsatz von strahlenvernetzenden Schmelzklebstoffen ist die Wärmestandfestigkeit der Klebenaht deutlich erhöht.

Gegenstand der vorliegenden Erfindung sind ebenfalls hülsenförmige Etiketten aus schrumpfbaren oder dehnbaren Ein- oder Mehrschichtfolien, die an einer Längsseite durch einen reaktiven Klebstoff verklebt sind. Solche Etiketten können farblos, gefärbt oder bedruckt sein. Die Herstellung der Etiketten kann einzeln erfolgen durch Beschichten mit Klebstoff und ringförmiges Verkleben, insbesondere wird jedoch ein Folienschlauch hergestellt, der nach dem Verkleben in die passenden hülsenförmigen Etiketten geschnitten wird.

Die Klebenaht ist auf der Klebefläche bevorzugt nicht bedruckt, im Fall von strahlenvernetzenden Klebstoffen ist die Verklebungsstelle für die aktivierende Strahlung durchlässig. Die Klebenaht soll im allgemeinen durchgängig auf der Länge des Etiketts verklebt sein, im Ausnahmefall kann der Klebstoff jedoch auch intermittierend aufgebracht sein. Der Klebstoff wird in einer Breite zwischen 1 bis 20 mm aufgetragen, insbesondere zwischen 2 bis 10 mm. Die Schichtdicke des Klebstoffs ist dünn und soll zwischen1 µm bis 300 µm betragen, insbesondere zwischen 3 µm bis 150 µm.

Die fertiggestellte Klebstoffnaht soll glatt in die Folie übergehen und keine Wulst aufweisen. Die Naht soll keine thermische Verfärbung aufweisen und keine Verfärbung durch den aufgetragenen Klebstoff.

Das erfindungsgemäße Etikett kann bevorzugt unmittelbar vor dem Aufbringen auf den Gegenstand (in-line Verfahren) hergestellt werden. Dabei wird das Etikett durch Verkleben einer Folie in Schlauchform hergestellt, diese in passende Teile zerschnitten und danach unmittelbar auf den Gegenstand aufgebracht. Dabei weist die Klebenaht 5 min., bevorzugt 1 min., nach dem Zusammenfügen der Klebenaht eine Haftung auf, die der thermischen Belastung des Schrumpfens oder der rückstellenden Kraft bei der Dehnung standhält. Die Scherfestigkeit der Verklebung der thermisch unbelasteten Folie soll zwischen 25 bis zu 250 N / 12,5 mm betragen. Das Etikett soll an der Klebenaht unter den Applikationsbedingungen des Etiketts auf den Gegenstand nicht zerstört werden, d. h. die Klebenaht soll sich nicht öffnen oder die Überlappung soll nicht verrutschen.

Der Anwendungsbereich der erfindungsgemäßen Etiketten ist breit. Sie können als Rund-um Etiketten eingesetzt werden. Dabei sind diese besonders für rotationsförmige Gegenstände geeignet, es können aber auch andere Formen, insbesondere Konturflaschen, mit den Etiketten versehen werden. Unter Verwendung als Etikett soll auch eingeschlossen sein, solche schrumpfbaren hülsenförmigen Schlauchabschnitte als Sicherung für z.B. Flaschenverschlüsse zu verwenden. Ebenso ist es möglich mehrere Gegenstände gemeinsam in einer ringförmigen Hülse zu verpacken. Die zu verpackenden Gegenstände können verschiedene Produkte enthalten, wie Lebensmittel, Getränke, medizinische Produkte, Kosmetika, Gegenstände des täglichen Bedarfs.

Durch das erfindungsgemäße Verfahren ist es möglich, eine stabile Befestigung von hülsenförmigen Etiketten auf einem Gegenstand zu erzeugen. Die erfindungsgemäßen Etiketten zeigen nach der Applikation keine Störungen oder Verformungen an der Klebenaht. Die Kanten sind so stabil verklebt, dass auch eine in-line Weiterverarbeitung des Folienschlauchs zu den Etiketten möglich ist, die unmittelbar auf die Gegenstände aufgebracht werden können. Damit wird das Herstellungsverfahren wesentlich vereinfacht. Durch die erfindungsgemäße Verwendung von reaktiven Schmelzklebstoffen wird der Einsatz von lösemittelhaltigen Klebstoffen vermindert oder ganz vermieden.

### Dynamic Shear Test - Verfahren:

In einem Zugfestigkeitsmessgerät der Firma Zwick wird bei 25 °C die Reißfestigkeit der Verklebung bei einer Vorschubgeschwindigkeit von 5 mm/ min gemessen. Dazu werden zwei Folien in einer Breite von 10 mm verklebt, die Prüfkörper mit einer Breite von 12,5 mm geschnitten und quer zur Verklebung vermessen. Gemessen wird die Kraft, bei der die Klebverbindung versagt.

### Beispiel

### Versuch 1

Es wird auf einer bedruckten, am Rand transparenten Corona-vorbehandelten OPP-Folie (Exxon mobil 50 LR 210) an einer Seite ein Schmelzklebstoff Technopur CB 2005-21 (Isocyanat-vernetzender PU-Schmelzklebstoff, Auftragstemperatur 130°C, Schichtdicke 100 µm, Breite 1,0 cm) (Henkel KGaA) aufgetragen. Die Folienkanten werden überlappt und 30 sec. unter Druck zusammengepresst. Innerhalb von 3 min. wird der Schlauch in passende Etiketten zerschnitten und ein Etikett auf eine gereinigte Aluminiumdose ( 5 cm Durchmesser ) geschoben und die Überlappung der Naht markiert. Anschließend wird in einem Umluftschrank bei 120 °C das Etikett aufgeschrumpft. Danach wird weiterhin bei 120°C erwärmt. Nach konstanten Zeitintervallen von 5 min. bei 120 °C wird beurteilt, ob die Klebenaht den Schrumpfungsprozess unverändert übersteht. Es ist nach 15 min. kein Verrutschen der Klebenaht festzustellen.

### Versuch 2

Es wird auf einer transparenten OPP-Folie (Exxon mobil 50 LR 210) an einer Seite ein Schmelzklebstoff Technomelt 4105 (UV-vernetzender PU-Schmelzklebstoff, Auftragstemperatur 100°C, Schichtdicke 100 µm, Schichtbreite 1,0 cm) ( Henkel KGaA ) aufgetragen. Die Folienkanten werden überlappt und 30 sec. unter Druck zusammengepresst. Anschließend wird die Klebenaht mit einem UV-Strahler (Fa. Fusion F-600, 10 cm Abstand) bestrahlt. Nach 2 min. wird der Schlauch in passende Etiketten zerschnitten und auf eine gereinigte Aluminiumdose geschoben und die Überlappung der Naht markiert. Anschließend wird in einem Umluftschrank bei 120°C geschrumpft. Nach Zeitintervallen von 5 min. bei andauerndem Erwärmen auf 120 °C wird beurteilt, ob die Klebenaht die Belastung unverändert übersteht. Es ist nach 15 min. kein Verrutschen der Klebenaht festzustellen.

## Patentansprüche

1. Verfahren zum kontinuierlichen Herstellen von Folienschläuchen zur Herstellung von hülsenförmigen Etiketten für Verpackungen, **dadurch gekennzeichnet, dass** eine einschichtige oder mehrschichtige Folie, die elastisch dehnbar oder in der Wärme schrumpfbar ist,
a) an einer Längskante oder an beiden gegenüberliegenden Längskanten auf einer Seite bzw. auf gegenüberliegenden Seiten der Folie mit einem lösemittelfreien Klebstoff beschichtet wird,
b) danach die beiden Längskanten mit der Klebstoffschicht miteinander überlappend aufeinander gebracht und verklebt werden,
c) der so entstandene Folienschlauch direkt oder nach einer Lagerung weiterverarbeitet werden kann,
wobei der Klebstoff ausgewählt wird aus durch aktinische Strahlung vernetzenden Klebstoffen oder durch Polykondensation von reaktiven Gruppen vernetzenden Klebstoffen.

2. Verfahren nach Anspruch 1, **dadurch gekennzeichnet, dass** kein Primer auf die zu verklebende Fläche aufgetragen wird.

3. Verfahren nach Anspruch 1 oder 2, **dadurch gekennzeichnet, dass** der Klebstoff ein UV-vernetzender Klebstoff ist.

4. Verfahren nach Anspruch 1 oder 2, **dadurch gekennzeichnet, dass** der Klebstoff ein 2-K Klebstoff vernetzend durch reaktive Gruppen ist.

5. Verfahren nach Anspruch 1 oder 2, **dadurch gekennzeichnet, dass** der Klebstoff ein durch Temperaturerhöhung vernetzender 1-K Klebstoff ist.

6. Verfahren nach Anspruch 1 bis 5, **dadurch gekennzeichnet, dass** der Klebstoff ein Schmelzklebstoff ist.

7. Verfahren nach einem der Ansprüche 1 bis 6, **dadurch gekennzeichnet, dass** der Schlauch unmittelbar nach der Herstellung in Abschnitte geteilt wird und danach auf den zu etikettierenden Gegenstand angebracht wird.

8. Verfahren nach Anspruch 7, **dadurch gekennzeichnet, dass** der Klebstoff innerhalb von 3 Minuten seine Haftung zu den verklebten Oberflächen ausbildet.

9. Verfahren nach Anspruch 1 bis 6, **dadurch gekennzeichnet, dass** der Schlauch nach der Herstellung gelagert wird.

10. Verfahren nach Anspruch 9, **dadurch gekennzeichnet, dass** der Klebstoff bei der Lagerung nachhärtet und dabei seine endgültige Haftung bildet.

11. Verfahren nach einem der Ansprüche 1 bis 10, **dadurch gekennzeichnet, dass** die Folie eine Schrumpffolie ist.

12. Verfahren nach Anspruch 11, **dadurch gekennzeichnet, dass** der Klebstoff bei Temperaturen unterhalb der Schrumpftemperatur der Folie aufgetragen und vernetzt wird.

13. Verfahren nach einem der Ansprüche 1 bis 10, **dadurch gekennzeichnet, dass** die Folie eine elastisch dehnbare Folie ist.

14. Verfahren nach einem der Ansprüche 1 bis 13, **dadurch gekennzeichnet, dass** die Folie vor dem Verkleben vorbehandelt und/oder bedruckt wird.

15. Folienschlauch oder hülsenförmig vorgefertigtes Etikett aus elastisch dehnbarem oder in der Wärme schrumpfbarem Folienmaterial mit einer längsseitigen Klebenaht hergestellt nach einem Verfahren nach einem der Ansprüche 1 bis 14.

16. Folienschlauch oder hülsenförmig vorgefertigtes Etikett nach Anspruch 15, **dadurch gekennzeichnet, dass** die Verklebung der Längsnaht mit einem lösemittelfreien 1-k Schmelzklebstoff vernetzend durch aktinische Strahlung oder bei erhöhter Temperatur hergestellt wurde.

17. Folienschlauch oder hülsenförmig vorgefertigtes Etikett nach Anspruch 15 oder 16, **dadurch gekennzeichnet, dass** die Verklebung eine Zugkraft größer 25 N / 12,5 mm aufweist, gemessen bei 25 °C im Dynamic Shear Test.

18. Verwendung von Klebstoffen, die durch UV-Strahlung oder durch Polykondensation von reaktive Gruppen vernetzen, zum Verkleben von Folienschläuchen oder hülsenförmigen Etiketten.

19. Verwendung nach Anspruch 18, **dadurch gekennzeichnet, dass** ein Schmelzklebstoff eingesetzt wird.

20. Verwendung nach Anspruch 18 oder 19, **dadurch gekennzeichnet, dass** der Folienschlauch unmittelbar nach der Verklebung in hülsenförmige Etiketten konfektioniert wird und anschließend auf den Gegenstand angebracht wird.

## Claims

1. A method for continuously producing tubular films for the production of sleeve-shaped labels for packages, **characterized in that** a monolayer or multilayer film, which is elastically extensible or heat-shrinkable,
a) is coated on a longitudinal edge or on two opposite longitudinal edges with a solvent-free adhesive on one side or on the opposite sides of the film,
b) both longitudinal edges with the adhesive layer overlapping with each other are then applied onto each other and adhered,
c) the thereby formed tubular film may be further processed directly or after storage,
wherein the adhesive is selected from adhesives which crosslink by actinic radiation or adhesives which crosslink by polycondensation of reactive groups.

2. The method according to claim 1, **characterized in that** no primer is applied on the surface to be adhesively bonded.

3. The method according to claim 1 or 2, **characterized in that** the adhesive is a UV crosslinking adhesive.

4. The method according to claim 1 or 2, **characterized in that** the adhesive is a 2-component adhesive which crosslinks by means of reactive groups.

5. The method according to claim 1 or 2, **characterized in that** the adhesive is a single component adhesive which crosslinks by means of an increase in temperature.

6. The method according to claim 1 to 5, **characterized in that** the adhesive is a hot melt adhesive.

7. The method according to any of claims 1 to 6, **characterized in that** the tube is directly divided into sections after the production and is then applied on the object to be labeled.

8. The method according to claim 7, **characterized in that** the adhesive develops its adhesion to the adhesively bonded surfaces within 3 minutes.

9. The method according to claim 1 to 6, **characterized in that** the tube is stored after the production.

10. The method according to claim 9, **characterized in that** the adhesive subsequently hardens during storage and then develops its definitive adhesion.

11. The method according to any of claims 1 to 10, **characterized in that** the film is a shrinkable film.

12. The method according to claim 11, **characterized in that** the adhesive is applied and is crosslinked at temperatures below the shrink temperature.

13. The method according to any of claims 1 to 10, **characterized in that** the film is an elastically extensible film.

14. The method according to any of claims 1 to 13, **characterized in that** the film is pretreated and/or printed before adhesive bonding.

15. A tubular film or sleeve-shaped prefabricated label of elastically extensible or heat-shrinkable film material, with a adhesive longitudinal side seam produced in accordance with a method according to any of claims 1 to 14.

16. The tubular film or sleeve-shaped prefabricated label according to claim 15, **characterized in that** the adhesive bond of the longitudinal seam was produced with a solvent-free single-component hot melt adhesive which crosslinks by means of actinic radiation or at a high temperature.

17. The tubular film or sleeve-shaped prefabricated label according to claim 15 or 16, **characterized in that** the adhesive bond has a tensile force greater than 25 N/12.5 mm, measured at 25°C in a dynamic shear test.

18. The use of adhesives, which crosslink by UV radiation or by polycondensation of reactive groups, for adhesively bonding tubular films or sleeve-shaped labels.

19. The use according to claim 8, **characterized in that** a hot melt adhesive is applied.

20. The use according to claim 18 or 19, **characterized in that** the tubular film after the adhesive bonding is directly made into sleeve-shaped labels and then applied on the object.

## Revendications

1. Procédé pour la fabrication en continu de films tubulaires pour la fabrication d'étiquettes en forme de manchons pour des emballages, **caractérisé en ce qu'**un film monocouche ou multicouche, qui manifeste une aptitude à l'allongement élastique ou à un retrait à la chaleur,
a) est enduit sur un bord longitudinal ou sur les deux bords longitudinaux opposés, sur un côté, respectivement sur les côtés opposés du film, avec un adhésif exempt de solvant ;
b) les deux bords longitudinaux avec la couche d'adhésif sont ensuite amenés en chevauchement réciproque et collés l'un à l'autre ;
c) le film tubulaire que l'on obtient de la sorte pouvant être soumis à un traitement ultérieur, directement ou après un entreposage ;
dans lequel l'adhésif est choisi à partir d'adhésifs qui subissent une réticulation lors d'une exposition à un rayonnement actinique ou à partir d'adhésifs dont la réticulation dépend d'une polycondensation de groupes réactifs.

2. Procédé selon la revendication 1, **caractérisé en ce qu'**on n'applique aucune couche de fond sur la surface à coller.

3. Procédé selon la revendication 1 ou 2, **caractérisé en ce que** l'adhésif est un adhésif qui subit une réticulation par exposition au rayonnement ultraviolet.

4. Procédé selon la revendication 1 ou 2, **caractérisé en ce que** l'adhésif est un adhésif à deux composants dont la réticulation dépend de groupes réactifs.

5. Procédé selon la revendication 1 ou 2, **caractérisé en ce que** l'adhésif est un adhésif à un seul composant dont la réticulation dépend d'une élévation de la température.

6. Procédé selon l'une quelconque des revendications 1 à 5, **caractérisé en ce que** l'adhésif est un adhésif fusible.

7. Procédé selon l'une quelconque des revendications 1 à 6, **caractérisé en ce que** le tube est divisé directement après sa fabrication en tronçons et est ensuite appliqué sur l'objet à étiqueter.

8. Procédé selon la revendication 7, **caractérisé en ce que** l'adhésif établit son adhésion pour obtenir des surfaces collées dans un laps de temps de 3 minutes.

9. Procédé selon l'une quelconque des revendications 1 à 6, **caractérisé en ce que** le tube est entreposé après sa fabrication.

10. Procédé selon la revendication 9, **caractérisé en ce que** l'adhésif subit un durcissement ultérieur lors de l'entreposage et établit à ce moment son adhésion définitive.

11. Procédé selon l'une quelconque des revendications 1 à 10, **caractérisé en ce que** le film est un film thermorétrécissable.

12. Procédé selon la revendication 11, **caractérisé en ce que** l'adhésif est appliqué et réticulé à des températures inférieures à la température de retrait du film.

13. Procédé selon l'une quelconque des revendications 1 à 10, **caractérisé en ce que** le film est un film apte à un allongement élastique.

14. Procédé selon l'une quelconque des revendications 1 à 13, **caractérisé en ce que** le film est soumis à un prétraitement et/ou à une impression avant le collage.

15. Film tubulaire ou étiquette préfabriquée en forme de manchon, constitué d'une matière en film manifestant une aptitude à l'allongement élastique ou au retrait thermique, comprenant un joint adhésif sur son côté longitudinal, fabriqué conformément à un procédé selon l'une quelconque des revendications 1 à 14.

16. Film tubulaire ou étiquette préfabriquée en forme de manchon selon la revendication 15, **caractérisé en ce que** le collage du joint longitudinal a été réalisé avec un adhésif à un seul composant exempt de solvant qui subit une réticulation via une exposition à un rayonnement actinique ou par exposition à une température élevée.

17. Film tubulaire ou étiquette préfabriquée en forme de manchon selon la revendication 15 ou 16, **caractérisé en ce que** le collage présente une résistance à la traction qui est supérieure à 25 N/12,5 mm, mesurée à 25°C dans le test à cisaillement dynamique.

18. Utilisation d'adhésifs qui subissent une réticulation via une exposition à un rayonnement ultraviolet ou par polycondensation de groupes réactifs, pour le collage de films tubulaires ou d'étiquettes en forme de manchons.

19. Utilisation selon la revendication 18, **caractérisée en ce qu'**on met en oeuvre un adhésif fusible.

20. Utilisation selon la revendication 18 ou 19, **caractérisée en ce que** le film tubulaire est confectionné directement après le collage pour obtenir des étiquettes en forme de manchons et est ensuite appliqué sur l'objet.
